# EUROPÄISCHE PATENTANMELDUNG

(11) **EP 0 878 922 A2**
(43) Veröffentlichungstag der Anmeldung: **18.11.1998**
(21) Anmeldenummer: 98101120.8
(22) Anmeldetag: 23.01.1998
(51) Int. Cl.: H04B 7/08

(54) **Verfahren zur Auswahl von Empfängern, Empfänger und Auswahlschaltung**

(30) Priorität: 16.05.1997 DE 19720522
(71) Anmelder: MOTOROLA, INC., Schaumburg, IL 60196 (US)
(72) Erfinder: Drake, Jochen, 38304 Wolfenbuettel (DE)
(74) Vertreter: Richardt, Markus Albert

(57) **Zusammenfassung**

Es wird ein Verfahren zur Auswahl von Empfängern, ein Empfänger und eine Auswahlschaltung vorgeschlagen, die zur Auswahl desjenigen Empfängers mit der besten Empfangsqualität innerhalb eines Funksystems dienen. Dabei werden vorzugsweise ortsfeste Empfänger (1, 2, 3, 4, 6) eines auf einen Träger (5) modulierten Funksignals einer mobilen Sendestation (10) ausgewählt. Das Nutz-Stör-Verhältnis des empfangenen Signals wird ermittelt und ein Empfangsweg wird zu einer Überleiteinrichtung (15) durchgeschaltet. Von der mobilen Sendestation (10) wird im Frequenzbereich oder in der Nähe des Frequenzbereichs des auf den Träger (5) modulierten Nutzsignals, vorzugsweise am unteren oder oberen Rand des Nutzfrequenzbereichs (20, 25, 30), ein Pilotton (35,...,40) abgestrahlt. Für mindestens einen der Empfänger (1, 2, 3, 4, 6) wird ein Nutz-Stör-Verhältnis zwischen dem empfangenen Pilotton (35,...,40) und während der Übertragung überlagerten Störungen ermittelt. Derjenige Empfänger (1, 2, 3, 4, 6) wird zur Weiterleitung des empfangenen Nutzsignals durchgeschaltet, der das höchste Nutz-Stör-Verhältnis aufweist.

## Beschreibung

### Stand der Technik

Die Erfindung geht von einem Verfahren zur Auswahl von Empfängern, einem Empfänger und einer Auswahlschaltung nach der Gattung der unabhängigen Ansprüche aus.

Aus der Kundendienstschrift 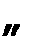 Gleichwellenfunk" der Robert Bosch GmbH, Geschäftsbereich Elektronik, Ausgabe 9.85 ist bereits ein Empfängerauswahlsystem bekannt, das denjenigen Empfänger mit dem qualitativ besten Empfangssignal aussucht. Bei diesem Auswahlsystem wird ein von einem Mobilgerät empfangenes Signal direkt in ortsfesten Funkstellen bewertet und über Zwei-Draht-Leitungen oder Richtfunkstrecken einer Zentralstation zugeleitet. Der Empfänger in jeder ortsfesten Funkstelle wird nach dem Stör-Nutz-Verhältnis in sieben Stufen bewertet und sendet kontinuierlich Bewertungstelegramme zur Zentrale. Das erfolgt parallel zur Sprache. Steht kein Träger am Empfänger an, so wird ein Ruhesignal zur Zentrale geschickt, das gleichzeitig zur Überwachung des Empfangsweges dient. Die Zentralstation registriert kontinuierlich alle parallel einlaufenden Telegramme und schaltet stets den jeweils besten Empfangsweg zu einem Lautsprecher oder zu einer Überleiteinrichtung durch.

### Vorteile der Erfindung

Das erfindungsgemäße Verfahren mit den Merkmalen des unabhängigen Anspruchs 1 hat demgegenüber den Vorteil, daß zur Ermittlung der Empfangsqualität eines Empfängers ein in seiner Frequenz und seiner Sendefeldstärke genau definiertes und vorgebbares Signal in Form eines Pilottons von der mobilen Sendestation abgestrahlt wird, so daß durch Auswertung der Pilotton-Störungen ein möglichst aussagekräftiges Stör-Nutz-Verhältnis für jeden Empfänger des Pilottons ermittelt wird. Auf diese Weise läßt sich die Auswahl des jeweils qualitativ besten Empfangsweges besser gewährleisten.

Vorteilhaft ist weiterhin, daß der Pilotton mit seiner Frequenz innerhalb oder in unmittelbarer Nähe des Nutzfrequenzbereiches liegt, so daß er auf dem Übertragungsweg zu den ortsfesten Empfängern auch den gleichen Störungen wie das Nutzsignal unterliegt. Auf diese Weise wird die Aussagekraft des über den Pilotton ermittelten Stör-Nutz-Verhältnisses über die Qualität des jeweiligen Empfangsweges bzw. Empfängersignals erhöht.

Durch die in den abhängigen Ansprüchen 2 bis 8 aufgeführten Maßnahmen sind vorteilhafte Weiterbildungen und Verbesserungen des im unabhängigen Anspruch 1 angegebenen Verfahrens möglich.

Besonders vorteilhaft ist es, daß für mindestens einen der Empfänger der Jitter des empfangenen Pilottones durch Vergleich mit einem Referenzpilotton ermittelt wird, daß das Stör-Nutz-Verhältnis durch das Ausmaß des Jitters gebildet wird und daß der Empfänger zur Weiterleitung des empfangenen Nutzsignals durchgeschaltet wird, der den Pilotton mit geringstem Jitter empfängt. Dabei wird der Jitter nicht nur durch die Rauschleistung eines Funkkanales sondern auch durch Impulsstörungen, Fading und Reflexionen hervorgerufen. Da der Jitter das gesamte Störpotential eines Funkkanales abbildet, ist dieser Parameter besser als Bewertungsmaßstab geeignet, als das nur auf das pegelabhängige Kriterium aufbauende Verfahren der Rauschleistungsmessung.

Vorteilhaft ist weiterhin, daß für mindestens einen der Empfänger die Rauschleistung in einem unmodulierten Teil in der Nähe, vorzugsweise am Rand des Nutzfrequenzbereiches ermittelt wird, daß das Stör-Nutz-Verhältnis durch den Quotienten aus den Effektivwerten der Rauschleistung und der Pilottonleistung gebildet wird und daß der Empfänger mit dem geringsten Quotienten zur Weiterleitung des empfangenen Nutzsignals durchgeschaltet wird. Wenn auch die Rauschleistung nicht das gesamte Störpotential eines Funkkanals abbildet, so ist doch deren Ermittlung vergleichsweise einfach und ermöglicht dennoch eine gute Annäherung an das tatsächliche Stör-Nutz-Verhältnis.

Vorteilhaft ist auch, daß ein den Pilotton unterhalb einer vorgegebenen Empfangsfeldstärke empfangender Empfänger zur Abgabe eines Ruhesignals veranlaßt wird. Auf diese Weise kann mittels des Pilottons zusätzlich die Funktion erfüllt werden, einen aktiven Empfänger, d. h. einen Empfänger, bei dem ein empfangenes Nutzsignal nicht durch Rauschen verdeckt wird, zu kennzeichnen, so daß eine einfachere und schnellere Auswahl des Empfängers mit der besten Empfangsqualität aus der Menge der aktiven Empfänger ermöglicht wird.

Außerdem kann das Ruhesignal zur Kennzeichnung eines fehlerfreien Betriebszustandes des Empfängers verwendet werden, wenn es zusätzlich von entsprechenden Überwachungsschaltungen gesteuert wird.

Vorteilhaft ist dabei weiterhin, daß nicht versehentlich ausgeschaltete Empfänger zur Übertragung ausgewählt werden, indem bei ihnen keine Rauschleistung und keine Störungen ermittelt wurden.

Vorteilhaft ist auch, daß in räumlich benachbarten Funksystemen Pilottöne unterschiedlicher Frequenz verwendet werden. Auf diese Weise erfüllt der Pilotton die zusätzliche Funktion der Kennzeichnung benachbarter Funksysteme, wodurch verhindert wird, daß Empfänger, die Nutzsignale aus benachbarten Funksystemen empfangen, zum Lautsprecher oder der Überleiteinrichtung durchgeschaltet werden.

Vorteilhaft ist auch, daß das Stör-Nutz-Verhältnis und die Auswahl des Empfängers in einer mit den Empfängern über Leitungen oder Richtfunkstrecken verbundenen zentralen Auswahlschaltung ermittelt und durchgeführt wird. Auf diese Weise lassen sich die Empfänger mit möglichst wenig Funktionalität und dadurch preisgünstig und aufwandsarm herstellen.

Vorteilhaft ist auch, daß das Stör-Nutz-Verhältnis und die Auswahl des Empfängers in den miteinander verbundenen Empfängern ermittelt und durchgeführt wird. Auf diese Weise kann auf eine separate bzw. zentrale Meß- und Auswahlschaltung verzichtet werden.

Der erfindungsgemäße Empfänger mit den Merkmalen des unabhängigen Anspruchs 9 hat den Vorteil, daß der Pilotton für eine Weiterverarbeitung herausgefiltert werden kann. Auf diese Weise läßt sich der im Übertragungskanal übertragene Pilotton auf vielfältige Weise als Informationsquelle für Störungen auf dem Übertragungsweg und/oder für die Unterscheidung von Funksignalen benachbarter Funksysteme und/oder für die Beurteilung der Empfangsfeldstärke der ebenfalls empfangenen Nutzsignale nutzen.

Durch die in den abhängigen Ansprüchen 10 bis 13 aufgeführten Maßnahmen sind vorteilhafte Weiterbildungen und Verbesserungen des im unabhängigen Anspruch 9 angegebenen Empfängers möglich.

Ein Vorteil besteht darin, daß die Meßschaltung einen Pilotton detektiert, wenn dessen Empfangsfeldstärke oberhalb der vorgegebenen Empfangsfeldstärke liegt und daß die Meßschaltung den Empfänger zur Abgabe eines Ruhesignals veranlaßt, wenn innerhalb einer vorgegebenen Zeit die Detektion eines Pilottons ausbleibt. Auf diese Weise kann der erfindungsgemäße Empfänger in Abhängigkeit der Detektion eines Pilottones ein Signal abgeben, mittels dem feststellbar ist, ob der Empfänger gerade aktiv ist. Durch die Verwendung eines in seiner Sendefeldstärke und Frequenz genau definierten und vorgegebenen Pilottones innerhalb oder in unmittelbarer Nähe des Nutzfrequenzbereichs ist dabei mit großer Sicherheit feststellbar, ob der Empfänger aktiv ist oder nicht.

Vorteilhaft ist dabei, daß einem der Filterstufe nachgeschalteten Vergleicher der empfangene Pilotton und ein Referenzpilotton zugeführt sind und daß der Vergleicher ein Signal in Abhängigkeit des Vergleichs der beiden Pilottöne abgibt. Somit läßt sich auf einfache Weise der Jitter des empfangenen Pilottones als Meßgröße für das Stör-Nutz-Verhältnis des Empfangssignals ermitteln, wobei der Jitter das gesamte Störpotential eines Funkkanals abbildet.

Vorteilhaft ist weiterhin, daß der Filterstufe eine Rauschleistungsermittlungsschaltung,insbesondere ein Rauschverstärker und ein Gleichrichter, nachgeschaltet ist, daß die Rauschleistungsermittlungsschaltung ein Signal in Abhängigkeit der ermittelten Rauschleistung abgibt und daß in einem weiteren nachgeschalteten Vergleicher ein Vergleich der ermittelten Rauschleistung mit der empfangenen Pilottonleistung erfolgt und der weitere Vergleicher ein entsprechendes Signal als Meßgröße abgibt. Auf diese Weise läßt sich zwar keine das gesamte Störpotential des Funkkanales abbildende Meßgröße ermitteln, der Vergleich der Rauschleistungen stellt jedoch eine gute Näherung für das Störpotential des Funkkanals dar, und erfordert weniger Aufwand, da beispielsweise kein Referenzpilotton mit näherungsweiser Synchronisation auf den empfangenen Pilotton bereitgestellt werden muß.

Vorteilhaft ist besonders, daß eine vorzugsweise in ihrem Aufbau der ersten Meßschaltung entsprechende zweite Meßschaltung vorgesehen ist, daß der zweiten Meßschaltung das Signal des Funk-Empfangsteils mindestens eines weiteren Empfängers zuführbar ist, daß die erste und die zweite Meßschaltung an eine Vergleichsschaltung angeschlossen sind und daß die Vergleichsschaltung ein Schaltsignal an eine nachgeschaltete Schaltvorrichtung in Abhängigkeit des Vergleichs der von den beiden Meßschaltungen abgegebenen Signale abgibt, wobei die Schaltvorrichtung in Abhängigkeit des Schaltsignals so schaltbar ist, daß der Empfänger sein eigenes Empfangssignal oder das des mindestens einen weiteren Empfängers abgibt. Auf diese Weise ist bei dieser dezentralen Realisierung der Auswahlfunktion der Empfänger mit erhöhter Funktionalität ausgestattet, so daß er den Vergleich seiner Empfangsqualität mit der Empfangsqualität mindestens eines weiteren angeschlossenen Empfängers selbst durchführen und den Empfänger mit der besseren Empfangsqualität beispielsweise an eine Überleiteinrichtung durchschalten kann. Ein solcher Empfänger ist aufgrund seiner höheren Funktionalität vielseitiger einsetzbar und spart in einem Funksystem mit der Möglichkeit zur Auswahl des Empfängers mit der besten Empfangsqualität eine zentrale Auswahlschaltung ein.

Die erfindungsgemäße Auswahlschaltung mit den Merkmalen des unabhängigen Anspruchs 14 hat den Vorteil, daß der Pilotton für eine Weiterverarbeitung herausgefiltert werden kann. Auf diese Weise läßt sich der im Übertragungskanal übertragene Pilotton auf vielfältige Weise als Informationsquelle für Störungen auf dem Übertragungsweg und/oder für die Unterscheidung von Funksignalen benachbarter Funksysteme und/oder für die Beurteilung der Empfangsfeldstärke der ebenfalls empfangenen Nutzsignale nutzen.

Durch die in den abhängigen Ansprüchen 15 bis 17 aufgeführten Maßnahmen sind vorteilhafte Weiterbildungen und Verbesserungen der im unabhängigen Anspruch 14 angegebenen Auswahlschaltung möglich.

Ein Vorteil besteht darin, daß die Meßschaltung einen Pilotton detektiert, wenn dessen Empfangsfeldstärke oberhalb der vorgegebenen Empfangsfeldstärke liegt und daß die Vergleichsschaltung nur unter Empfängern auswählt, deren Pilotton sie detektiert. Auf diese Weise kann die erfindungsgemäße Auswahlschaltung zur Ermittlung aktiver Empfänger von diesen abgegebene Pilottöne detektieren. Da diese Pilottöne bei einer genau definierten und vorgegebenen Frequenz- und Sendefeldstärke ursprünglich abgegeben wurden und innerhalb oder in unmittelbarer Nähe des Nutzfrequenzbereichs liegen, ist eine besonders sichere Kennzeichnung der aktiven Empfänger möglich, so daß für eine Auswahl des Empfängers mit der besten Empfangsqualität eines Nutzsignals die Wahl eines aktiven Empfängers gewährleistet ist.

Vorteilhaft ist es, daß einem der Filterstufe nachgeschalteten Vergleicher der empfangene Pilotton und ein Referenzpilotton zugeführt sind, daß der Vergleicher ein Signal in Abhängigkeit des Vergleichs der beiden Pilottöne an die Vergleichsschaltung abgibt und daß die Vergleichsschaltung den Empfänger mit dem geringsten Jitter des Pilottones auswählt. Auf diese Weise wird bei der Auswahl des Empfängers durch Bewertung der Empfangsqualität das gesamte Störpotential des Funkkanales berücksichtigt, so daß eine fehlerfreie Auswahl des Empfängers mit der besten Empfangsqualität möglich ist.

Vorteilhaft ist auch, daß der Filterstufe eine Rauschleistungsermittlungsschaltung, insbesondere ein Rauschverstärker und ein Gleichrichter, nachgeschaltet ist, daß die Rauschleistungsermittlungsschaltung ein Signal in Abhängigkeit der ermittelten Rauschleistung abgibt, daß in einem weiteren nachgeschalteten Vergleicher ein Vergleich der ermittelten Rauschleistung mit der empfangenen Pilottonleistung erfolgt und der weitere Vergleicher ein entsprechendes Signal als Meßgröße abgibt und daß die Vergleichsschaltung den Empfänger mit der geringsten Rauschleistung im Vergleich zur entsprechenden Pilottonleistung auswählt. Auf diese Weise wird bei der Auswahl des Empfängers zwar nicht das gesamte Störpotential des Funkkanales berücksichtigt, jedoch mit der Rauschleistung eine gute Näherung getroffen, die zudem weniger Aufwand erfordert, da beispielsweise kein Referenzpilotton mit näherungsweiser Synchronisation auf den empfangenen Pilotton zur Verfügung gestellt werden muß.

### Zeichnung

Ausführungsbeispiele der Erfindung sind in der Zeichnung dargestellt und in der nachfolgenden Beschreibung näher erläutert. Es zeigen Figur 1 ein Funksystem mit mehreren durch eine Auswahlschaltung auswählbaren Empfängern, Figur 2 den Nutzfrequenzbereich im Basisband und nach Modulation auf einen Träger, Figur 3 ein Blockschaltbild einer Auswahlschaltung, Figur 4 ein Blockschaltbild einer Schaltung zur Ermittlung des Pilottonjitters, Figur 5 ein Blockschaltbild einer Schaltung zur Ermittlung des Verhältnisses zwischen Rauschleistung und Pilottonleistung, Figur 6 ein Zeitdiagramm zur Darstellung des Pilottonjitters und Figur 7 ein Funksystem mit mehreren auswählbaren Empfängern, jedoch ohne separate Auswahlschaltung.

### Beschreibung des Ausführungsbeispiels

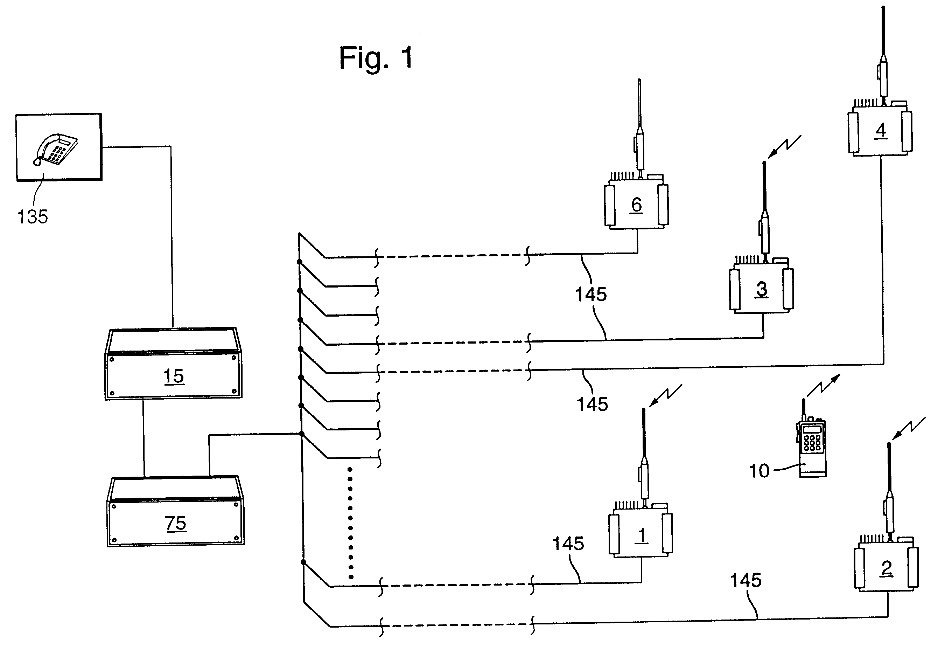

In Figur 1 kennzeichnet 75 eine Auswahlschaltung, an die über Zwei-Draht-Leitungen ein erster ortsfester Empfänger 1, ein zweiter ortsfester Empfänger 2, ein dritter ortsfester Empfänger 3, ein vierter ortsfester Empfänger 4 und ein fünfter ortsfester Empfänger 6 angeschlossen sind. Die Darstellung gemäß Figur 1 zeigt, daß noch weitere außer den fünf Empfängern 1, 2, 3, 4, 6 an die Auswahlschaltung 75 anschließbar sind. Die Verbindung zwischen den einzelnen Empfängern 1, 2, 3, 4, 6 und der Auswahlschaltung 75 kann alternativ über Funk-, insbesondere über Richtfunkstrecken, erfolgen. Innerhalb des von den Empfängern 1, 2, 3, 4, 6 gebildeten Funksystems befindet sich eine mobile Sendestation 10. Die Auswahlschaltung 75 ist über eine Überleiteinrichtung 15 an eine Nebenstellenanlage 135 angeschlossen. Gemäß Figur 1 sendet die mobile Sendestation 10 Nutzinformationen, die vom ersten Empfänger 1, vom zweiten Empfänger 2 und vom dritten Empfänger 3 mit einer Feldstärke empfangen werden, die oberhalb einer vorgegebenen Empfangsfeldstärke liegt. Der vierte Empfänger 4 und der fünfte Empfänger 6 empfangen das von der mobilen Sendestation 10 abgestrahlte Nutzsignal mit einer Feldstärke, die unterhalb der vorgegebenen Empfangsfeldstärke liegt. Die Auswahlschaltung 75 wählt denjenigen Empfänger 1, 2, 3, 4, 6 mit der höchsten Empfangsqualität des von der mobilen Sendestation 10 empfangenen Nutzsignals aus. Zur Ermittlung der Empfangsqualität wird dabei für jeden Empfänger 1, 2, 3, 4, 6 das empfangene Nutzsignal mit den bei der Übertragung überlagerten Störungen verglichen. Die Auswahlschaltung 75 wählt dann denjenigen Empfänger aus, der das höchste Nutz-Stör-Verhältnis, das heißt das geringste Stör-Nutz-Verhältnis aufweist und schaltet ihn zur Weiterleitung des empfangenen Nutzsignals über die Überleiteinrichtung 15 an die Nebenstellenanlage 135 durch. Die Überleiteinrichtung 15 dient dabei unter anderem der Steuerung des Verbindungsaufbaus und der Erstellung eines für den Verbindungsaufbau erforderlichen Protokolls. Ändern sich während der Übertragung von der mobilen Sendestation 10 zur Nebenstellenanlage 135 die Empfangsbedingungen bei den Empfängern 1, 2, 3, 4, 6, beispielsweise dadurch, daß die mobile Sendestation 10 innerhalb des Funksystems bewegt wird, so wird auf einen anderen Empfänger 1, 2, 3, 4, 6 umgeschaltet, sobald bei diesem anderen Empfänger 1, 2, 3, 4, 6 dann die bessere Empfangsqualität vorliegt. Bei der Übertragung von Digitaltelegrammen kann zur Vermeidung von Phasensprüngen nach der Starterkennung der einmal ausgewählte Empfänger 1, 2, 3, 4, 6 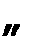 festgehalten" werden, bis das Telegramm beendet ist.

Zwischen mobilen Sendestationen 10 kann innerhalb des Funksystems auch ohne Nebenstellenanlage 135 eine Verbindung mittels der Überleiteinrichtung 15 aufgebaut werden.

Der vierte Empfänger 4 und der fünfte Empfänger 6 erzeugen ein Ruhesignal und geben dieses an die Auswahlschaltung 75 ab, so daß diese erkennt, daß der vierte Empfänger 4 und der fünfte Empfänger 6 gerade kein Nutzsignal oberhalb der vorgegebenen Empfangsfeldstärke empfangen und berücksichtigt diese beiden Empfänger 4, 6 solange bei der Auswahl nicht, wie diese das Ruhesignal absenden.

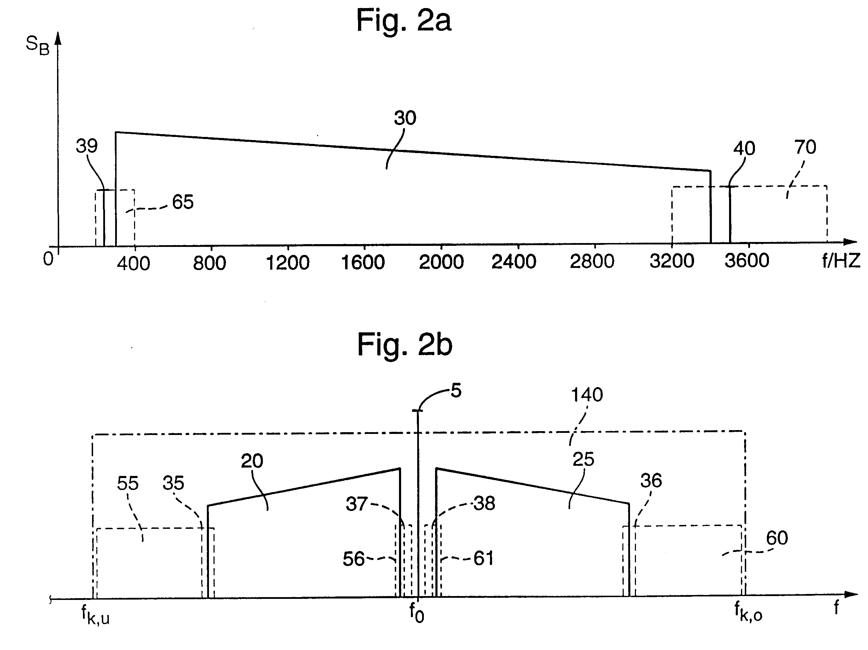

Gemäß Figur 2 a) ist die spektrale Verteilung S_{B} eines von der mobilen Sendestation 10 abgestrahlten Nutzsignals im Basisband über der Frequenz aufgetragen. Der zugehörige Nutzfrequenzbereich im Basisband ist in Figur 2 a) mit dem Bezugszeichen 30 gekennzeichnet und reicht von 300 Hz bis 3400 Hz. Figur 2 b) zeigt dann das für die Übertragung von der mobilen Sendestation 10 zu einem der Empfänger 1, 2, 3, 4, 6 auf einen Träger 5 bei der Frequenz f₀ aufmodulierte Nutzsignal mit seiner über der Frequenz f aufgetragenen spektralen Verteilung. So ergibt sich unterhalb der Trägerfrequenz f₀ ein unteres Nutzseitenband 20 und oberhalb der Trägerfrequenz f₀ ein oberes Nutzseitenband 25. Das untere Nutzseitenband 20, die Trägerfrequenz f₀ und das obere Nutzseitenband 25 werden innerhalb eines Übertragungskanals 140 mit einer unteren Grenzfrequenz f_{k,u} und einer obere Grenzfrequenz f_{k,o} per Funk übertragen. Zur Kennzeichnung des Funksystems gemäß Figur 1 wird mit dem Nutzsignal im Übertragungskanal 140 ein Pilotton übertragen, dessen Frequenz von in benachbarten Funksystemen übertragenen Pilottönen verschieden ist und der somit zur Unterscheidung von in einem Funksystem empfangenen Nutzsignalen dient. Wird also z. B. in einem Funksystem ein Nutzsignal mit einem Pilotton empfangen, der zu einem benachbarten Funksystem gehört, so wird der dieses Nutzsignal empfangende Empfänger 1, 2, 3, 4, 6 nicht an die Überleiteinrichtung 15 durchgeschaltet und ein Falschruf dadurch verhindert. Der Pilotton wird auch zur Beurteilung der Empfangsfeldstärke und insbesondere der Störungen auf dem Empfangsweg genutzt. Ein solcher Pilotton wird vorzugsweise am unteren oder am oberen Rand des Nutzfrequenzbereiches 30 im Basisband übertragen, wobei er sowohl innerhalb dieses Nutzfrequenzbereichs 30 als auch in dessen unmittelbarer Nähe übertragen werden kann. Gemäß Figur 2 a) ist für den Pilotton eine erste mögliche Übertragungsfrequenz 39 unterhalb der unteren Grenze des Nutzfrequenzbereiches 30 und eine zweite mögliche Übertragungsfrequenz 40 oberhalb der oberen Grenze des Nutzfrequenzbereiches 30 angegeben. Dabei kann die erste mögliche Übetragungsfrequenz 39 innerhalb eines ersten Frequenzbereichs 65 gewählt werden, der am unteren Ende des Nutzfrequenzbandes 30 teilweise mit diesem überlappt, und die zweite mögliche Übertragungsfrequenz 40 kann in einem zweiten Frequenzbereich 70 gewählt werden, der am oberen Ende des Frequenzbereichs 30 liegt teilweise mit diesem überlappt. Dabei reicht der erste Frequenzbereich 65 bis zur Frequenz 400 Hz und der zweite Frequenzbereich 70 startet bei 3200 Hz. Nach Modulation des ersten Frequenzbereiches 65 mit der ersten möglichen Übertragungsfrequenz 39, des Nutzfrequenzbereichs 30 und des zweiten Frequenzbereichs 70 mit der zweiten möglichen Übertragungsfrequenz 40 auf den Träger 5 ergibt sich oberhalb des Trägers 5 gemäß Figur 2 b) ein dritter Frequenzbereich 61 der am unteren Ende des oberen Nutzseitenbands 25 teilweise mit diesem überlappt und der gemäß dem in Figur 2 a) gewählten Beispiel für die zwei möglichen Übertragungsfrequenzen 39, 40 zwischen dem unteren Ende des oberen Nutzseitenbandes 25 und dem Träger 5 eine entsprechend aufmodulierte erste Pilottonfrequenz 38 enthält. Entsprechend ergibt sich am oberen Ende des oberen Nutzseitenbandes 25 ein vierter Frequenzbereich 60 der am oberen Ende des oberen Nutzseitenbandes 25 teilweise mit diesem überlappt und oberhalb des oberen Nutzseitenbandes 25 eine zweite Pilottonfrequenz 36 entsprechend der Aufmodulation der ersten möglichen Übertragungsfrequenz 40 enthält. Das obere Ende des vierten Frequenzbereichs 60 liegt dabei noch unterhalb der oberen Grenzfrequenz f_{k,o} des Übertragungskanals 140. Spiegelbildlich zur Trägerfrequenz f₀ des Trägers 5 ergibt sich unterhalb des Trägers 5 ein fünfter Frequenzbereich 56 mit einer durch Aufmodulation der ersten möglichen Übertragungsfrequenz 39 erzeugten dritten Pilottonfrequenz 37 zwischen dem Träger 5 und dem oberen Ende des unteren Nutzseitenbandes 20, der am oberen Ende des unteren Nutzseitenbandes 20 teilweise mit diesem überlappt. Am unteren Ende des unteren Nutzseitenbandes 20 ist dann entsprechend ein sechster Frequenzbereich 55 angeordnet, der am unteren Ende des unteren Nutzseitenbandes 20 teilweise mit diesem Überlappt und unterhalb des unteren Endes des unteren Seitenbandes 20 die durch Modulation der zweiten möglichen Übertragungsfrequenz 40 auf den Träger 5 gebildete vierte Pilottonfrequenz 35 aufweist. Unterhalb des unteren Endes des sechsten Frequenzbereiches 55 befindet sich dann die untere Grenzfrequenz f_{k,u} des Übertragungskanals 140. Wählt man also den Pilotton bei der ersten möglichen Übertragungsfrequenz 39, so ergibt sich innerhalb des Übertragungskanals 140 die erste Pilottonfrequenz 38 und die dritte Pilottonfrequenz 37. Wählt man hingegen für den Pilotton die zweite mögliche Übertragungsfrequenz 40, so ergibt sich im Übertragungskanal 140 die zweite Pilottonfrequenz 36 und die vierte Pilottonfrequenz 35 zur Übertragung des Pilottons.

Über die in Figur 1 dargestellten und als Zwei-Draht-Leitungen oder Richtfunkstrecken ausgebildeten Verbindungen werden die von den aktiven, d. h. kein Ruhesignal abgebenden Empfängern 1, 2, 3 von der mobilen Sendestation 10 empfangenen Nutzsignale und Pilottöne nach Demodulation ins Basisband an die Auswahlschaltung 75 weitergeleitet. Die Verbindungen zwischen den Empfängern 1, 2, 3, 4, 6 und der Auswahlschaltung 75 sind durch das Bezugszeichen 145 gekennzeichnet.

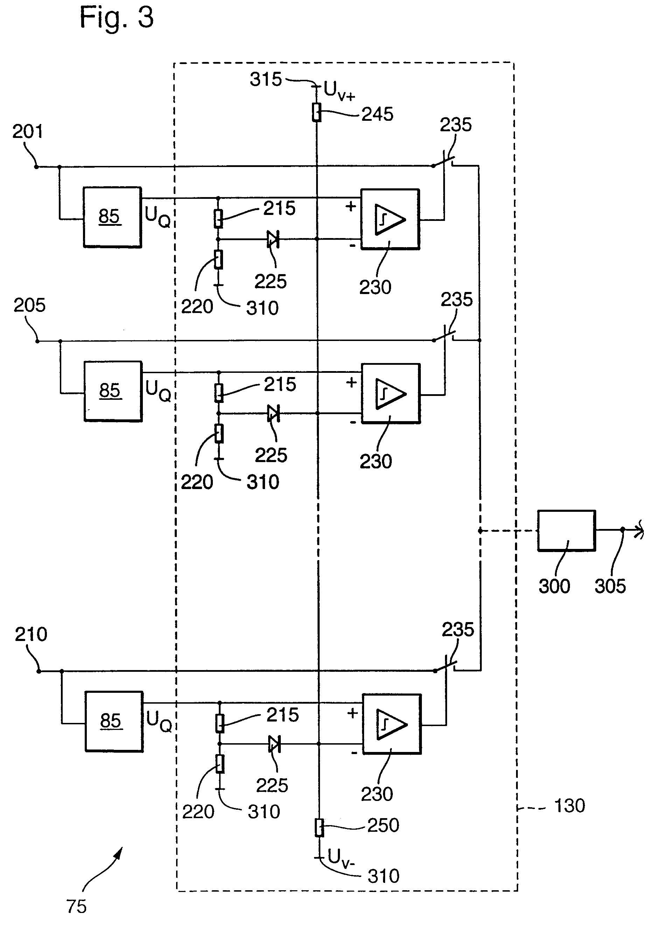

Gemäß Figur 3 weist die Auswahlschaltung 75 einen ersten Eingang 201 zum Anschluß bzw. zur Verbindung mit dem ersten Empfänger 1, einen zweiten Eingang 205 zur Verbindung mit dem zweiten Empfänger 2, einen dritten Eingang 210 zur Verbindung mit dem dritten Empfänger 3 und weitere in Figur 3 nicht dargestellte Eingänge zur Verbindung mit dem vierten Empfänger 4, dem fünften Empfänger 6 und weiteren in Figur 1 nicht dargestellten Empfängern auf. Der erste Eingang 201, der zweite Eingang 205, der dritte Eingang 210 und die weiteren nicht dargestellten Eingänge sind jeweils mit dem Eingang einer Meßschaltung 85 verbunden, an deren Ausgang jeweils eine Gleichspannung U_{Q} als Maß für das Stör-Nutz-Verhältnis zwischen dem vom jeweiligen aktiven Empfänger 1, 2, 3 empfangenen Pilotton und vom jeweiligen aktiven Empfänger 1, 2, 3 im Übertragungskanal 140 empfangenen Störungen, die sich bei der Übertragung von der mobilen Sendestation 10 zum jeweiligen aktiven Empfänger 1, 2, 3 dem Nutzsignal und dem Pilotton überlagern, wobei die auf den Verbindungen 145 zwischen den aktiven Empfängern 1, 2, 3 und der Auswahlschaltung 75 auftretende Signalverschlechterung des Pilottons und die dortige Überlagerung weiterer Störungen für die verschiedenen Verbindungsleitungen 145 in der Auswahlschaltung 75 ebenfalls berücksichtigt werden, anliegt. Der Ausgang jeder Meßschaltung 85 ist über einen ersten Widerstand 215 und einen zweiten Widerstand 220 mit einem Bezugspotential 310 verbunden. Der Ausgang jeder Meßschaltung 85 ist außerdem mit dem nicht invertierenden Eingang (+) eines Komparators 230 verbunden. Die Mittelanzapfung zwischen dem ersten Widerstand 215 und dem zweiten Widerstand 220 ist jeweils mit der Anode einer Diode 225 verbunden, deren Kathode mit einem invertierenden Eingang (-) des jeweiligen Komparators 230 verbunden ist. Die invertierenden Eingänge (-) der Komparatoren 230 sind auch untereinander verbunden. Ein dritter Widerstand 245 verbindet die invertierenden Eingänge (-) der Komparatoren 230 mit einem Potential 315 positiver Vorspannung U_{V+}. Ein vierter Widerstand 250 verbindet die invertierenden Eingänge (-) der Komparatoren 230 mit dem Bezugspotential 310, das durch eine negative Vorspannung U_{V-} negativ vorgespannt ist. Der erste Eingang 201, der zweite Eingang 205, der dritte Eingang 210 und die weiteren in Figur 3 nicht dargestellten Eingänge sind jeweils über einen Schalter 235 mit dem Eingang eines Pilottonfilters 300 zur Unterdrückung der gewählten Pilottonfrequenzen verbindbar. Der Ausgang 305 des Pilottonfilters ist dann auf die Überleiteinrichtung 15 geführt. Die Schalterstellung des mit dem jeweiligen Eingang 201, 205, 210 der Auswahlschaltung 75 verbundenen Schalters 235 wird vom Ausgangssignal desjenigen Komparators 230 eingestellt, der vom jeweils selben Eingang 201, 205, 210 mit der jeweiligen Meßgröße U_{Q} versorgt wird. Der Vergleich der Meßgrößen U_{Q} und die Auswahl eines der aktiven Empfänger 1, 2, 3 erfolgt in einer Vergleichsschaltung 130, die die Komparatoren 230, die Schalter 235, die Widerstände 215, 220, 245, 250 und die Dioden 225 umfaßt.

Die Schaltung gemäß Figur 3 funktioniert wie folgt: Durch den aus dem dritten Widerstand 245 und dem vierten Widerstand 250 gebildeten Spannungsteiler und die Wahl der positiven Vorspannung U_{V+} und der negativen Vorspannung U_{V-}wird für den invertierenden Eingang (-) der Komparatoren 230 eine Schaltschwelle festgelegt, die von der Meßgröße U_{Q} überschritten werden muß, damit der entsprechende Komparator 230 den Schalter 235 zur Verbindung des entsprechenden Eingangs 201, 205, 210 mit dem Pilottonfilter 300 schließt. Überschreitet keine der Meßgrößen U_{Q} diese Schwelle, so reicht die Empfangsqualität der aktiven Empfänger 1, 2, 3 nicht aus, um ein Empfangssignal an die Überleiteinrichtung 15 und gegebenenfalls an die Nebenstellenanlage 135 weiterzureichen. Durch entsprechende Dimensionierung des dritten Widerstandes 245 und des vierten Widerstandes 250, sowie der positiven Vorspannung U_{V+} und der negativen Vorspannung U_{V-} kann diese Schaltschwelle für die Komparatoren 230 je nach gewünschter Mindestempfangsqualität eingestellt werden. Liegt eine als Meßspannung ausgebildete Meßgröße U_{Q} so weit oberhalb der am invertierenden Eingang (-) voreingestellten Spannung, daß die Diode 225 leitend wird, so wird die für das Durchschalten des entsprechenden Komparators 230 erforderliche minimale Spannungsdifferenz zwischen nicht invertierendem Eingang (+) und invertierendem Eingang (-) eingestellt und der entsprechende Schalter 235 geschlossen. Zur Erzielung dieser minimal erforderlichen Spannungsdifferenz am Eingang des Komparators 230 ist der erste Widerstand 215 entsprechend gering zu dimensionieren, so daß dadurch verhindert wird, daß Komparatoren 230, die mit geringeren Meßspannungen U_{Q} angesteuert werden durchschalten können. Auf diese Weise wird sichergestellt, daß immer nur derjenige Schalter 235 durchschaltet, der mit dem die höchste Meßspannung U_{Q} liefernden Eingang 201, 205, 210 verbunden ist. Das an diesem Eingang anliegende Empfangssignal wird dann über den zugehörigen geschlossenen Schalter 235 an das Pilottonfilter 300 zur Unterdrückung des Pilottons weitergeleitet und von dort an die Überleiteinrichtung 15 und gegebenenfalls an die Nebenstellenanlage 135 übertragen.

Die Meßgröße U_{Q} wird also mit zunehmender Empfangsqualität größer und ist somit ein Maß für das Stör-Nutz-Verhältnis des vom aktiven Empfänger 1, 2, 3 empfangenen Signals.

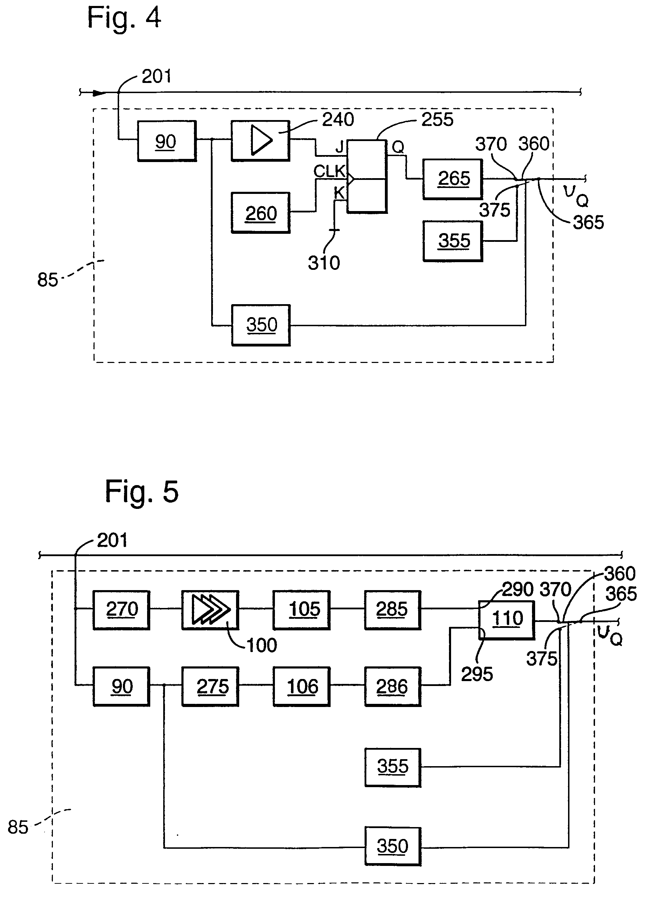

Figur 4 zeigt eine Meßschaltung 85 als Blockschaltbild, die zur Ermittlung der Meßspannung U_{Q} dient. Dies sei beispielhaft dargestellt für den ersten Eingang 201 der Auswahlschaltung 75. Dabei ist der erste Eingang 201 mit dem Eingang einer Filterstufe 90 verbunden, deren Ausgang mit dem Eingang eines Verstärkers und Rechteckformers 240 verbunden ist. Der Ausgang des Verstärkers und Rechteckformers 240 ist auf den J-Eingang eines JK-Flipflops 255 geführt, dessen K-Eingang mit dem Bezugspotential 310 verbunden ist. Dem Takteingang CLK des JK-Flipflops 255 ist ein Referenzpilotton zugeführt, der in einer entsprechenden Aufbereitungseinheit 260 erzeugt wird. Der Q-Ausgang des JK-Flipflops 255 ist auf den Eingang eines Gleichrichters und Inverters 265 geführt, dessen Ausgang als Meßspannung die Gleichspannung U_{Q} abgibt.

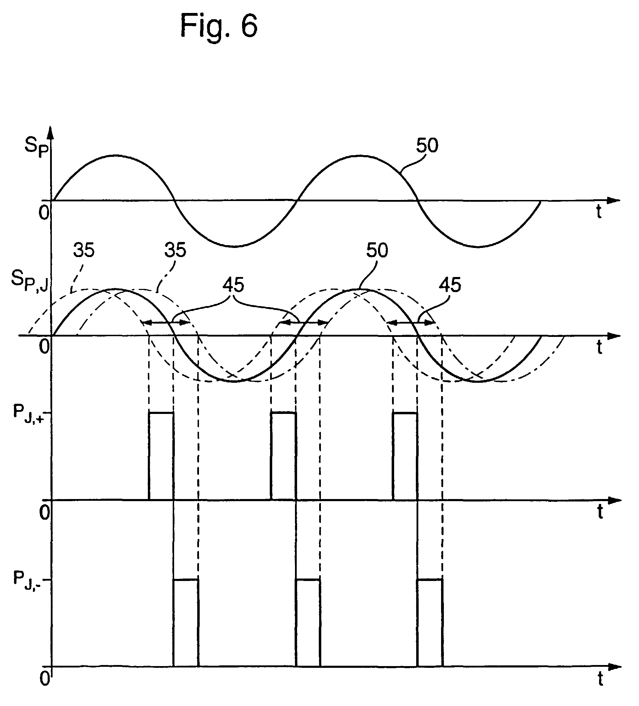

In Figur 6 ist ein Signal- und Impulsfahrplan zur Erlauterung der Funktionsweise der Meßschaltung 85 gemäß Figur 4 dargestellt. Über einer ersten Zeitachse t ist die Signalamplitude S_{P} eines Referenzpilottons 50 als sinusförmige Schwingung dargestellt. In einem weiteren Zeitdiagramm des Signal- und Impulsfahrplans ist über der Zeit t wiederum die Signalamplitude S_{P} des sinusförmigen Referenzpilottons 50 dargestellt. Im gleichen Zeitdiagramm ist außerdem die jitterbehaftete Signalamplitude S_{J} eines beispielsweise bei der zweiten möglichen Übertragungsfrequenz 40 empfangenen Pilottons dargestellt, wobei in einer punktierten Darstellung ein zeitlich dem Referenzpilotton 50 vorauseilender Pilotton bei der zweiten möglichen Übertragungsfrequenz 40 und in einer gestrichelten Darstellung ein dem Referenzpilotton 50 zeitlich nacheilender Pilotton bei der zweiten möglichen Übertragungsfrequenz 40 dargestellt ist. Die bei beiden Pilottönen der zweiten möglichen Übertragungsfrequenz 40 vorkommende Phasenverschiebung ist in Figur 6 jeweils durch Pfeile 45 gekennzeichnet, die den Jitter des Pilottons bei der zweiten möglichen Übertragungsfrequenz 40 gegenüber dem Referenzpilotton 50 verdeutlichen. Zur Ansteuerung des JK-Flipflops 255 wandelt der Verstärker und Rechteckformer 240 den sinusförmig empfangenen Pilotton bei der zweiten möglichen Übertragungsfrequenz 40 in ein Rechteck um. Aus der Referenztonerzeugungseinheit 260 wird der Referenzpilotton 50 ebenfalls als auf den Mittelwert des empfangenen Pilottons synchronisiertes Rechtecksignal ausgegeben. Immer dann und solange der Pilotton bei der zweiten möglichen Übertragungsfrequenz 40 und der Referenzpilotton 50 ungleiches Vorzeichen haben, liegt am Q-Ausgang des JK-Flipflops 250 ein Impuls der Signalamplitude P_{J} an. Die für den dem Referenzpiloten 50 zeitlich vorauseilenden Pilotton bei der zweiten möglichen Übertragungsfrequenz 40 gemäß der punktierten Darstellung sich ergebende Impulsfolge ist über der Zeit t als Signal P_{J,+} dargestellt. Die Impulse enden dabei jeweils mit dem Nulldurchgang des Referenzpilottons 50. Die Impulsfolge, die sich aufgrund des dem Referenzpilotton 50 nacheilenden Pilottons bei der zweiten möglichen Übertragungsfrequenz 40 gemäß der gestrichelten Darstellung ergibt, ist über der Zeit t als Signal P_{J,-} in Figur 6 dargestellt. Die Impulse beginnen dabei jeweils mit dem Nulldurchgang des Referenzpilottons 50.

Je größer der Jitter 45 ist, desto breiter werden die Impulse der jeweiligen Impulsfolge und desto größer wird die Meßsspannung U_{Q}, die als Gleichspannung nach Gleichrichtung des Q-Ausgangs des JK-Flipflops 255 die Meßschaltung 85 verläßt. Dabei bildet der Jitter das gesamte Störpotential des Übertragungskanals 140 ab, d. h. durch den Jitter 45 wird nicht nur Rauschen, sondern es werden auch durch Fading, Reflexionen und Streuung auf den Übertragungskanal 140 sowie die Verbindungen 145 eingekoppelte Störungen berücksichtigt, so daß der Jitter 45 besser als Bewertungsmaßstab geeignet ist, als das nur auf das pegelabhängige Kriterium aufbauende Verfahren der Rauschleistungsmessung. Je größer die im Übertragungskanal 140 und auf den Verbindungen 145 eingekoppelten Störungen sind, um so größer wird der Jitter 140 und umso geringer wird aufgrund der an die Gleichrichtung anschließenden Invertierung die Meßspannung U_{Q}.

Die Filterschaltung 90 dient dabei der Unterdrückung des Nutzfrequenzbereichs 30 und dem Durchlaß des Pilottons bei der entsprechend gewählten möglichen Übertragungsfrequenz 39, 40.

In Figur 5 ist in einem weiteren Ausführungsbeispiel eine alternative Meßschaltung 85 angegeben. Sie ist beispielhaft ebenfalls mit dem ersten Eingang 201 der Auswahlschaltung 75 verbunden. Dabei ist der erste Eingang 201 mit dem Eingang der Filterstufe 90 und dem Eingang einer weiteren Filterstufe 270 verbunden. Der Ausgang der weiteren Filterstufe 270 ist mit dem Eingang eines Rauschverstärkers 100 verbunden, dessen Ausgang mit dem Eingang eines Gleichrichters 105 verbunden ist. Der Ausgang des Gleichrichters 105 ist mit dem Eingang eines Logarithmierers 285 verbunden, dessen Ausgang auf einen ersten Eingang 290 eines Subtrahierers 110 geführt ist. Am Ausgang des Subtrahierers 110 wird wiederum die Meßspannung U_{Q} als Gleichspannung abgegriffen. Der Ausgang der ersten Filterstufe 90 ist mit dem Eingang eines Pilottonverstärkers 275 verbunden, dessen Ausgang mit dem Eingang eines weiteren Gleichrichters 106 verbunden ist. Der Ausgang des weiteren Gleichrichters 106 ist mit dem Eingang eines weiteren Logarithmierers 286 verbunden. der Ausgang des weiteren Logarithmierers 286 ist auf einen zweiten Eingang 295 des Subtrahierers 110 geführt.

Mittels der ersten Filterstufe 90 wird im wesentlichen der Nutzfrequenzbereich 30 unterdrückt und der Pilotton bei der entsprechend gewählten Übertragungsfrequenz 39, 40 durchgelassen. Nach Verstärkung durch den Pilottonverstärker 275 wird der Pilotton im zweiten Gleichrichter 106 gleichgerichtet und anschließend im zweiten Logarithmierer 286 logarithmiert.

Die zweite Filterstufe 270 unterdrückt im wesentlichen den Nutzfrequenzbereich 30 und läßt im wesentlichen den ersten Frequenzbereich 65 und/oder den zweiten Frequenzbereich 70, jedoch ohne den Pilotton bei einer möglichen Übertragungsfrequenz 39, 40 durch. Das in den genannten beiden Frequenzbereichen 65, 70, vorliegende Rauschen wird im Rauschverstärker 100 verstärkt und im ersten Gleichrichter 105 gleichgerichtet. Anschließend erfolgt im ersten Logarithmierer 285 eine Logarithmierung. Durch Subtraktion im Subtrahierer 110 des gleichgerichteten und logarithmierten Rauschsignals vom gleichgerichteten und logarithmierten Pilottonsignal erhält man mit der Meßspannung U_{Q} ein Maß für das Nutz-Stör-Verhältnis des empfangenen Signals. Je größer die Rauschleistung im Vergleich zur Pilottonleistung ist, desto geringer wird die Differenz und damit die Meßspannung U_{Q} am Ausgang des Subtrahierers 110.

Bei den bislang geschilderten Ausführungsbeispielen ist die Meßschaltung 85 in der Auswahlschaltung 75 untergebracht. Ihre Funktionalität kann jedoch auch bereits in den jeweiligen Empfänger 1, 2, 3, 4, 6 verlagert werden.

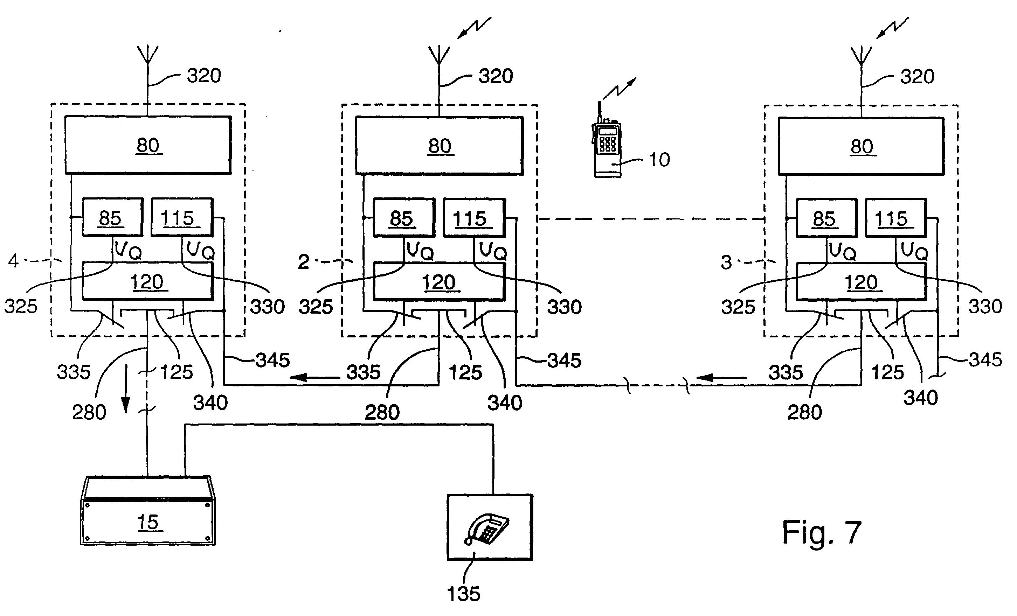

Beim Ausführungsbeispiel gemäß Figur 7 ist auch die aus Figur 3 bekannte Funktionalität der Vergleichsschaltung 130 der Auswerteschaltung 75 in den jeweiligen Empfänger 1, 2, 3, 4, 6 integriert, so daß beim Funksystem gemäß Figur 7 gar keine Auswahlschaltung 75 mehr erforderlich ist.

In Figur 7 ist der zweite Empfänger 2, der dritte Empfänger 3 und der vierte Empfänger 4 dargestellt. Außerdem ist die mobile Sendestation 10 dargestellt. Ein von der mobilen Sendestation 10 gesendetes Nutzsignal wird dabei vom zweiten Empfänger 2 und vom dritten Empfänger 3 mit einer Feldstärke oberhalb der vorgegebenen Empfangsfeldstärke empfangen. Die Empfangsfeldstärke des Nutzsignals liegt jedoch beim vierten Empfänger 4 unterhalb der vorgegebenen Empfangsfeldstärke. Im Funksystem gemäß Figur 7 können noch weitere Empfänger angeordnet sein, die in Figur 7 jedoch nicht dargestellt sind. Jeder der in Figur 7 dargestellten Empfänger 2, 3, 4 umfaßt eine Empfangsantenne 320, die mit dem Eingang eines Funk-Empfangsteils 80 verbunden ist, dessen Ausgang einerseits auf den Eingang der Meßschaltung 85 geführt ist und andererseits über einen ersten Schalter 335 einer Schaltvorrichtung 125 mit einem Signalausgang 280 des Empfängers 2, 3, 4 verbindbar ist. Der Ausgang der Meßschaltung 85 ist mit einem ersten Eingang 325 einer Vergleichsschaltung 120 des Empfängers 2, 3, 4 verbunden. Ein Signaleingang 345 des Empfängers 2, 3, 4 ist mit dem Eingang einer zweiten Meßschaltung 115 verbunden, deren Ausgang mit einem zweiten Eingang 330 der Vergleichsschaltung 120 des Empfängers 2, 3, 4 verbunden ist. Der Signaleingang 345 des Empfängers 2, 3, 4 ist außerdem über einen zweiten Schalter 340 der Schaltvorrichtung 125 mit dem Signalausgang 280 des Empfängers 2, 3, 4 verbindbar. Die erste Meßschaltung 85 und die zweite Meßschaltung 115 sind identisch aufgebaut. Die Anordnung aus erster Meßschaltung 85, zweiter Meßschaltung 115 und Vergleichsschaltung 120 des Empfängers 2, 3, 4 entspricht in ihrem Schaltungsaufbau beispielsweise der gemäß Figur 3 dargestellten Schaltungsanordnung mit zwei von den Eingängen 201, 205, 210. Der erste und der zweite Schalter 335, 340 entsprechen dabei jeweils dem Schalter 235 gemäß Figur 3. Das Pilottonfilter 300 ist dabei jedoch nicht zu verwenden, da es zweckmäßigerweise in der Überleiteinrichtung 15 angeordnet wird. Gemäß Figur 7 ist der Signalausgang 280 des dritten Empfängers 3 mit dem Signaleingang 345 des zweiten Empfängers 2 verbunden. Außerdem ist der Signalausgang 280 des zweiten Empfängers 2 mit dem Signaleingang 345 des vierten Empfängers 4 verbunden. Der Signalausgang 280 des vierten Empfängers 4 ist mit der Überleiteinrichtung 15 verbunden, an die die Nebenstellenanlage 135 angeschlossen ist. Gemäß der gestrichelten Darstellung in Figur 7 können zwischen dem zweiten Empfänger 2 und dem dritten Empfänger 3 weitere Empfänger angeordnet sein, genauso wie zwischen dem vierten Empfänger 4 und der Überleiteinrichtung 15. Das Pilottonfilter 300 zur Unterdrückung der gewählten Pilottonfrequenz 35, 36, 37, 38 ist dann zwischen den Signalausgang 280 des mit der Überleiteinrichtung 15 verbundenen Empfängers und der Überleiteinrichtung 15 oder in der Überleiteinrichtung 15 selbst anzuordnen. Gemäß dem Ausführungsbeispiel nach Figur 7 ist der Fall angenommen, daß der zweite Empfänger 2 das von der mobilen Sendestation 10 abgestrahlte Nutzsignal mit der höchsten Empfangsqualität empfängt. Die Vergleichsschaltung 120 des entsprechenden Empfängers 2, 3, 4 stellt dabei die Schalterstellung des ersten Schalters 335 und des zweiten Schalters 340 in Abhängigkeit des Vergleichsergebnisses der von der ersten Meßschaltung 85 und der von der zweiten Meßschaltung 115 gelieferten Meßspannung U_{Q}. Der zweite Schalter 340 des dritten Empfängers 3 ist geöffnet und der erste Schalter 335 des dritten Empfängers 3 ist geschlossen, so daß nicht der Signaleingang 345 des dritten Empfängers 3 sondern der Ausgang des Funk-Empfangsteils 80 des dritten Empfängers 3 mit dem Signalausgang 280 des dritten Empfängers 3 verbunden ist. Somit findet im zweiten Empfänger 2 ein Vergleich zwischen dem vom dritten Empfänger 3 empfangenen und an den zweiten Empfänger 2 weitergeleiteten Funksignal der mobilen Sendestation 10 mit dem entsprechend vom zweiten Empfänger 2 empfangenen Funksignal der mobilen Sendestation 10 statt. Da die Empfangsqualität beim zweiten Empfänger 2 besser ist als beim dritten Empfänger 3, schließt die Vergleichsschaltung 120 des zweiten Empfängers 2 den ersten Schalter 335 und öffnet den zweiten Schalter 340, so daß der Ausgang des Funk-Empfangsteils 80 des zweiten Empfängers 2 mit dem Signalausgang 280 des zweiten Empfängers 2 verbunden ist.

Im vierten Empfänger 4 wird somit das vom zweiten Empfänger 2 empfangene Funksignal der mobilen Sendestation 10 mit dem entsprechend vom vierten Empfänger 4 empfangenen Funksignal der mobilen Sendestation 10 verglichen. Da der vierte Empfänger 4 das Nutzsignal und auch den Pilotton mit einer Feldstärke empfängt, die unterhalb der vorgegebenen Empfangsfeldstärke liegt, ist die Empfangsqualität des zweiten Empfängers 2 vergleichsweise besser, so daß die Vergleichsschaltung 120 des vierten Empfängers 4 den ersten Schalter 335 des vierten Empfängers 4 öffnet und den zweiten Schalter 340 des vierten Empfängers 4 schließt, so daß der Ausgang des Funk-Empfangsteils 80 des zweiten Empfängers 2 direkt mit der Überleiteinrichtung 15 verbunden ist. Somit wurde der zweite Empfänger 2 mit der besten Empfangsqualität zur Verbindung mit der Nebenstellenanlage 135 ausgewählt, ohne daß eine Auswahlschaltung 75 benötigt wurde.

Die Meßschaltung 85 umfaßt gemäß Figur 4 und Figur 5 außerdem einen Detektor 350, dessen Eingang mit dem Ausgang der ersten Filterstufe 90 verbunden ist. Der Ausgang des Detektors 350 ist mit dem Steuereingang eines gesteuerten Meßgrößenschalters 360 verbunden, über den der Ausgang des Gleichrichters und Inverters 265 gemäß Figur 4 bzw. des Subtrahierers 110 gemäß Figur 5 mit einem Meßgrößenausgang 365 der Meßschaltung 85 verbindbar ist, an dem die von der Meßschaltung 85 ermittelte Meßspannung U_{Q} abgegeben wird. Dabei ist der Meßgrößenausgang 365 in einer ersten Schalterstellung 370 des Meßgrößenschalters 360 mit dem Ausgang des Gleichrichters und Inverters 265 gemäß Figur 4 bzw. des Subtrahierers 110 gemäß Figur 5 verbindbar, und in einer zweiten Schalterstellung 370 ist der Meßgrößenausgang 365 mit dem Ausgang eines Ruhesignalgenerators 355 verbindbar.

Wird im Detektor 350 innerhalb einer vorgegebenen Zeit kein von der ersten Filterstufe 90 durchgelassener Pilotton mit einer Feldstärke, die oberhalb der vorgegebenen Empfangsfeldstärke liegt, detektiert, so veranlaßt der Detektor 350 die Umschaltung des Meßgrößenschalters 360 von der ersten Schalterstellung 370 in die zweite Schalterstellung 375. Der Ruhesignalgenerator 355 erzeugt ein Gleichspannungssignal, dessen Wert unterhalb der durch den Spannungsteiler aus dem dritten Widerstand 245 und dem vierten Widerstand 250, das Potential 315 und das Bezugspotential 310 der Vergleichsschaltung 130 der Auswahlschaltung 75 bzw. der Vergleichsschaltung 120 des Empfängers 1, 2, 3, 4, 6 gebildeten Schaltschwelle liegt. Ein Empfänger 1, 2, 3, 4, 6, dessen Empfangsqualität unterhalb dieser vorgegebenen Schwelle liegt, wird auf diese Weise nicht an die Nebenstellenanlage 135 durchgeschaltet. Dabei kann die Meßschaltung 85 wie bereits beschrieben entweder in den Empfängern 1, 2, 3, 4, 6 oder in der Auswahlschaltung 75 verwendet werden.

Da die Pilottonfrequenzen 35, 36, 37, 38 innerhalb oder in unmittelbarer Nähe des oberen Nutzseitenbandes 25 bzw. des unteren Nutzseitenbandes 20 liegen, unterliegen sie auf dem Übertragungsweg von der mobilen Sendestation 10 zu den Empfängern 1, 2, 3, 4, 6 auch den gleichen Störungen wie das Nutzsignal. Somit ist das über den Pilotton ermittelte Nutz-Stör-Verhältnis ein repräsentatives Maß für die Empfangsqualität des Nutzsignals in den jeweiligen Empfängern 1, 2, 3, 4, 6. Zum Vergleich des Pilottons mit dem Referenzpilotton gemäß Figur 4 muß der auf den Träger 5 modulierte Pilotton vor dem Vergleich mit dem Referenzpilotton 50 demoduliert werden, da auch der Referenzpilotton 50 im Basisband als sinusförmige Schwingung vorliegt. Die Demodulation erfolgt dabei in bekannter Weise nach Empfang der Signale in den Empfängern 1, 2, 3, 4, 6 bzw. in deren jeweiligen Funk-Empfangsteil 80.

Signale von benachbarten Funksystemen werden schon deshalb nicht an die Nebenstellenanlage 135 durchgeschaltet, da der zugehörige Pilotton bei einer Frequenz übertragen wird, die von der ersten Filterstufe 90 unterdrückt wird, so daß diese Signale als mit nicht ausreichender Empfangsfeldstärke empfangen betrachtet werden.

## Patentansprüche

1. Verfahren zur Auswahl von vorzugsweise ortsfesten Empfängern (1, 2, 3, 4, 6) eines auf einen Träger (5) modulierten Funksignals einer mobilen Sendestation (10), bei dem ein Nutz-Stör-Verhältnis des empfangenen Signals ermittelt wird und bei dem ein Empfangsweg zu einer Überleiteinrichtung (15) durchgeschaltet wird, dadurch gekennzeichnet, daß von der mobilen Sendestation (10) im Frequenzbereich oder in der Nähe des Frequenzbereichs des auf den Träger (5) modulierten Nutzsignals, vorzugsweise am unteren oder oberen Rand des Nutzfrequenzbereiches (20, 25, 30), ein Pilotton (35,..., 40) abgestrahlt wird, daß für mindestens einen der Empfänger (1, 2, 3, 4, 6) ein Nutz-Stör-Verhältnis zwischen dem empfangenen Pilotton (35,..., 40) und während der Übertragung überlagerten Störungen ermittelt wird und daß der Empfänger (1, 2, 3, 4, 6) zur Weiterleitung des empfangenen Nutzsignals durchgeschaltet wird, der das höchste Nutz-Stör-Verhältnis aufweist.

2. Verfahren nach Anspruch 1, dadurch gekennzeichnet, daß für mindestens einen der Empfänger (1, 2, 3, 4, 6) der Jitter (45) des empfangenen Pilottones (35,..., 40) durch Vergleich mit einem Referenzpilotton (50) ermittelt wird, daß das Nutz-Stör-Verhältnis durch das Ausmaß des Jitters (45) gebildet wird und daß der Empfänger (1, 2, 3, 4, 6) zur Weiterleitung des empfangenen Nutzsignals durchgeschaltet wird, der den Pilotton (35,..., 40) mit geringstem Jitter (45) empfängt.

3. Verfahren nach Anspruch 1, dadurch gekennzeichnet, daß für mindestens einen der Empfänger (1, 2, 3, 4, 6) die Rauschleistung in einem vorzugsweise nutzsignal- und pilottonfreien Teil (55, 56, 60, 61, 65, 70) in der Nähe, vorzugsweise am Rand des Nutzfrequenzbereiches (20, 25, 30) ermittelt wird, daß das Nutz-Stör-Verhältnis durch den Quotienten aus den Effektivwerten der Pilottonleistung und der Rauschleistung gebildet wird und daß der Empfänger (1, 2, 3, 4, 6) mit dem höchsten Quotienten zur Weiterleitung des empfangenen Nutzsignals durchgeschaltet wird.

4. Verfahren nach einem der Ansprüche 1, 2 oder 3, dadurch gekennzeichnet, daß ein den Pilotton (35,..., 40) unterhalb einer vorgegebenen Empfangsfeldstärke empfangender Empfänger (1, 2, 3, 4, 6) zur Abgabe eines Ruhesignals veranlaßt wird.

5. Verfahren nach einem der vorherigen Ansprüche, dadurch gekennzeichnet, daß in räumlich benachbarten Funksystemen Pilottöne (35,..., 40) unterschiedlicher Frequenz verwendet werden.

6. Verfahren nach einem der vorherigen Ansprüche, dadurch gekennzeichnet, daß das Nutz-Stör-Verhältnis und die Auswahl des Empfängers (1, 2, 3, 4, 6) in einer mit den Empfängern (1, 2, 3, 4, 6) über Leitungen oder Funkverbindungen, insbesondere Richtfunkstrecken, verbundenen zentralen Auswahlschaltung (75) ermittelt und durchgeführt wird.

7. Verfahren nach einem der Ansprüche 1 bis 5, dadurch gekennzeichnet, daß das Nutz-Stör-Verhältnis in den Empfängern (1, 2, 3, 4, 6) ermittelt und die Auswahl des Empfängers (1, 2, 3, 4, 6) in Abhängigkeit der ermittelten Nutz-Stör-Verhältnisse in der zentralen Auswahlschaltung (75) durchgeführt wird.

8. Verfahren nacheinem der Ansprüche 1 bis 5, dadurch gekennzeichnet, daß das Nutz-Stör-Verhältnis und die Auswahl des Empfängers (1, 2, 3, 4, 6) in den miteinander verbundenen Empfängern (1, 2, 3, 4, 6) ermittelt und durchgeführt wird.

9. Empfänger (1, 2, 3, 4, 6) mit einem Funk-Empfangsteil (80), dadurch gekennzeichnet, daß eine mit dem Funk-Empfangsteil (80) verbundene Meßschaltung (85) vorgesehen ist, daß die Meßschaltung (85) eine Filterstufe (90) aufweist, daß die Filterstufe (90) den Nutzfrequenzbereich (30) zumindest teilweise unterdrückt, daß die Filterstufe (90) einen Pilotton (39, 40) innerhalb oder in unmittelbarer Nähe des Nutzfrequenzbereichs (30) durchläßt, daß in der Meßschaltung (85) ein Vergleich zwischen dem Pilotton (39, 40) und einer Vergleichsgröße erfolgt und daß in Abhängigkeit des Vergleichsergebnisses die Meßschaltung (85) ein Signal als Meßgröße für ein Nutz-Stör-Verhältnis abgibt.

10. Empfänger (1, 2, 3, 4, 6) nach Anspruch 9, dadurch gekennzeichnet, daß die Meßschaltung (85) einen Pilotton (39, 40) detektiert, wenn dessen Empfangsfeldstärke oberhalb der vorgegebenen Empfangsfeldstärke liegt und daß die Meßschaltung (85) den Empfänger (1, 2, 3, 4, 6) zur Abgabe eines Ruhesignals veranlaßt, wenn innerhalb einer vorgegebenen Zeit die Detektion eines Pilottons (39, 40) ausbleibt.

11. Empfänger (1, 2, 3, 4, 6) nach Anspruch 9 oder 10, dadurch gekennzeichnet, daß einem der Filterstufe (90) nachgeschaltetem Vergleicher (95) der empfangene Pilotton (39, 40) und ein Referenzpilotton (50) zugeführt sind und daß der Vergleicher (95) ein Signal in Abhängigkeit des Vergleichs des Pilottones (39, 40) mit dem Referenzpilotton (50) als Meßgröße abgibt.

12. Empfänger (1, 2, 3, 4, 6) nach Anspruch 9, 10 oder 11, dadurch gekennzeichnet, daß eine weitere Filterstufe (270) vorgesehen ist, daß die weitere Filterstufe (270) den Nutzfrequenzbereich (30) zumindest teilweise unterdrückt, daß die weitere Filterstufe (270) den empfangenen Pilotton (39, 40) unterdrückt, daß die weitere Filterstufe (270) einen Frequenzbereich (65, 70) in der Nähe des Nutzfrequenzbereichs (30) durchläßt, daß der weiteren Filterstufe (270) eine Rauschleistungsermittlungsschaltung (100, 105), insbesondere ein Rauschverstärker (100) und ein Gleichrichter (105), nachgeschaltet ist, daß die Rauschleistungsermittlungsschaltung (100, 105) ein Signal in Abhängigkeit der ermittelten Rauschleistung abgibt und daß in einem weiteren nachgeschalteten Vergleicher (110) ein Vergleich der ermittelten Rauschleistung mit der empfangenen Pilottonleistung erfolgt und der weitere Vergleicher (110) ein entsprechendes Signal als Meßgröße abgibt.

13. Empfänger (1, 2, 3, 4, 6) nach einem der Ansprüche 9 bis 12, dadurch gekennzeichnet, daß eine vorzugsweise in ihrem Aufbau der ersten Meßschaltung (85) entsprechende zweite Meßschaltung (115) vorgesehen ist, daß der zweiten Meßschaltung (115) das Signal des Funk-Empfangsteils (80) mindestens eines weiteren Empfängers (1, 2, 3, 4, 6) zuführbar ist, daß die erste und die zweite Meßschaltung (85, 115) an eine Vergleichsschaltung (120) angeschlossen sind und daß die Vergleichsschaltung (120) ein Schaltsignal an eine nachgeschaltete Schaltvorrichtung (125) in Abhängigkeit des Vergleichs der von den beiden Meßschaltungen (85, 115) abgegebenen Signale abgibt, wobei die Schaltvorrichtung (125) in Abhängigkeit des Schaltsignals so schaltbar ist, daß der Empfänger (1, 2, 3, 4, 6) sein eigenes Empfangssignal oder das des mindestens einen weiteren Empfängers (1, 2, 3, 4, 6) abgibt.

14. Auswahlschaltung (75), der von Empfängern (1, 2, 3, 4, 6) Signale zuführbar sind, wobei die Auswahlschaltung (75) zumindest von einem Teil der von den Empfängern (1, 2, 3, 4, 6) zugeführten Signalen Meßgrößen ableitet und in Abhängigkeit eines Vergleichs der Meßgrößen einen der Empfänger (1, 2, 3, 4, 6) auswählt und Signale des ausgewählten Empfängers (1, 2, 3, 4, 6) vorzugsweise an eine Nebenstellenanlage (135) weiterleitet, dadurch gekennzeichnet, daß für die Signale von mindestens zwei der Empfänger (1, 2, 3, 4, 6) jeweils eine Meßschaltung (85) vorgesehen ist, daß die Meßschaltung (85) eine Filterstufe (90) aufweist, daß die Filterstufe (90) einen Nutzfrequenzbereich (30) zumindest teilweise unterdrückt, daß die Filterstufe (90) einen vom jeweiligen Empfänger (1, 2, 3, 4, 6) zugeführten Pilotton (39, 40) innerhalb oder in unmittelbarer Nähe des Nutzfrequenzbereichs (30) durchläßt, daß in der Meßschaltung (85) ein Vergleich zwischen dem Pilotton (39, 40) und einer Vergleichsgröße erfolgt und daß die Meßschaltung (85) vom Vergleichsergebnis die Meßgröße ableitet.

15. Auswahlschaltung (75) nach Anspruch 14, dadurch gekennzeichnet, daß die Meßschaltung (85) einen Pilotton (39, 40) detektiert, wenn dessen Empfangsfeldstärke oberhalb der vorgegebenen Empfangsfeldstärke liegt und daß die Vergleichsschaltung (130) nur unter Empfängern (1, 2, 3, 4, 6) auswählt, deren Pilotton (39, 40) sie detektiert.

16. Auswahlschaltung (75) nach Anspruch 14 oder 15, dadurch gekennzeichnet, daß einem der Filterstufe (90) nachgeschaltetem Vergleicher (95) der empfangene Pilotton (39, 40) und ein Referenzpilotton (50) zugeführt sind, daß der Vergleicher (95) ein Signal in Abhängigkeit des Vergleichs des Pilottones (39, 40) mit dem Referenzpilotton (50) an die Vergleichsschaltung (130) abgibt und daß die Vergleichsschaltung (130) den Empfänger (1, 2, 3, 4, 6) mit dem geringsten Jitter (45) des Pilottones (39, 40) auswählt.

17. Auswahlschaltung (75) nach Anspruch 14, 15 oder 16, dadurch gekennzeichnet, daß eine weitere Filterstufe (270) vorgesehen ist, daß die weitere Filterstufe (270) den Nutzfrequenzbereich (30) zumindest teilweise unterdrückt, daß die weitere Filterstufe (270) den empfangenen Pilotton (39, 40) unterdrückt, daß die weitere Filterstufe (270) einen Frequenzbereich (65, 70) in der Nähe des Nutzfrequenzbereichs (30) durchläßt, daß der weiteren Filterstufe (270) eine Rauschleistungsermittlungsschaltung (100, 105), insbesondere ein Rauschverstärker (100) und ein Gleichrichter (105), nachgeschaltet ist, daß die Rauschleistungsermittlungsschaltung (100, 105) ein Signal in Abhängigkeit der ermittelten Rauschleistung abgibt, daß in einem weiteren nachgeschalteten Vergleicher (110) ein Vergleich der ermittelten Rauschleistung mit der empfangenen Pilottonleistung erfolgt und der weitere Vergleicher (110) ein entsprechendes Signal als Meßgröße abgibt und daß die Vergleichsschaltung (130) den Empfänger (1, 2, 3, 4, 6) mit der geringsten Rauschleistung im Vergleich zur entsprechenden Pilottonleistung auswählt.
